# EUROPÄISCHE PATENTSCHRIFT

(11) **EP 1 423 630 B1**
(45) Veröffentlichungstag und Bekanntmachung des Hinweises auf die Patenterteilung: **09.11.2005**
(21) Anmeldenummer: 02762258.8
(22) Anmeldetag: 30.08.2002
(51) Int. Cl.: F16J 15/16, F16J 15/00, F16J 15/447

(54) **DICHTUNGSANORDNUNG, INSBESONDERE ZUR ABDICHTUNG DER SPINDELWELLE EINER SPINDEL**
SEALING ARRANGEMENT, ESPECIALLY FOR SEALING THE SHAFT OF A SPINDLE
DISPOSITIF D'ETANCHEIFICATION ASSURANT NOTAMMENT L'ETANCHEITE DE L'ARBRE D'UNE BROCHE

(30) Priorität: 04.09.2001 DE 10143344
(43) Veröffentlichungstag der Anmeldung: 02.06.2004
(73) Patentinhaber: Paul Müller GmbH & Co. KG Unternehmensbeteiligungen, 90411 Nürnberg (DE)
(72) Erfinder: ERNST, Hermann, H., F., Old Saybrook, CT 06475 (US)
(74) Vertreter: Lösch, Christoph Ludwig Klaus
(86) Internationale Anmeldenummer: PCT/DE2002/003212
(87) Internationale Veröffentlichungsnummer: WO 2003/025436

(56) Entgegenhaltungen:
- CH-A- 369 329
- US-A- 4 428 587
- US-A- 5 221 095

## Beschreibung

Die Erfindung betrifft eine Dichtungsanordnung, insbesondere zur Abdichtung einer in einem Gehäuse drehend aufgenommenen Spindelwelle einer Spindel, mit einem stehenden Statorelement, welches mit einem rotierenden, insbesondere an der Welle der Spindel befestigten Rotorelement mindestens einen Hohlraum zur Aufnahme einer Dichtung bildet, wobei der Hohlraum über mindestens eine Öffnung mit einem Kanal der Dichtungsanordnung zur Abführung von bei der Rotation des Rotorelements in den Hohlraum eingetretener Flüssigkeit ausgebildet ist.

Als Stand der Technik sind zur Abdichtung von zueinander drehenden Teilen und insbesondere einer Spindelwelle einer Spindel gegenüber dem Gehäuse statische Dichtungen in Form von Kammer- oder Labyrinthdichtungen bekannt. Alternativ oder ergänzend werden Sperrluftdichtungen mit umlaufenden Düsenringen verwendet.

Aus der WO 99/49246 sind ferner dynamische Dichtsysteme bekannt, bei denen in einem Hohlraum zwischen einem Rotor- und einem Statorelement einer Dichtungsanordnung mehrere Dichtungen angeordnet sind. Ferner ist der Hohlraum über mindestens eine Öffnung mit einem (Eintritts-)kanal der Dichtung verbunden, um etwaige in den Hohlraum eingetretene Flüssigkeit wieder abzuführen. Derartige dynamische Dichtsysteme entfalten ihre Dichtungswirkung nur bei einer Relativbewegung zwischen Rotor- und Statorelement. Bei stehendem Rotor- und Statorelement wird keine oder nur eine unzureichende Abdichtung erreicht.

US-A-5,221,095 offenbart eine Dichtungsanordnung zur Abdichtung einer in einem Gehäuse drehend aufgenommenen Welle, wobei ein statisches Dichtungselement und ein weiteres dynamisches Dichtungselement vorgesehen sind, gemäß dem Oberbegriff des Anspruchs 1.

Der Erfindung liegt die Aufgabe zugrunde, eine Dichtungsanordnung anzubieten, welche sowohl im statischen als auch im dynamischen Anwendungsfall eine verbesserte Abdichtung bietet.

Die Aufgabe wird durch eine Dichtungsanordnung mit den Merkmalen des kennzeichnenden Teils des Patentanspruchs 1 in Verbindung mit den Merkmalen des Oberbegriffs des Patentanspruchs 1 gelöst. Vorteilhafte Ausführungsformen der Dichtungsanordnung werden in den Unteransprüchen 2 - 5 beschrieben.

Bei der erfindungsgemäßen Dichtungsanordnung ist in Ergänzung zu einer z.B. aus der WO 99/49246 bekannten Dichtungsanordnung, einer Kammer- oder einer Labyrinthdichtung mindestens ein weiteres Dichtungselement vorgesehen, welches das Rotorelement gegenüber dem Statorelement bei stillstehendem Rotorelement abdichtet. Damit wird eine Abdichtung der Dichtungsanordnung auch im stehenden Zustand erreicht.

Erfindungsgemäß ist das weitere Dichtungselement in einer Ausnehmung des Rotorelements der Dichtungsanordnung positionssicher aufgenommen.

Vorteilhafterweise besitzt die Ausnehmung einen (Spiel-)Bereich zur Aufnahme des insbesondere durch auftretende Fliehkräfte in radialer Richtung aufgeweiteten weiteren Dichtungselements. Dabei kann das weitere Dichtungselement bei auftretenden Fliehkräften seine Dichtwirkung vermindern und aufheben, wobei die dynamische Dichtwirkung durch die im Hohlraum der Dichtungsanordnung angeordnete Dichtung gewährleistet bleibt. Eine weitere Verbesserung der Abdichteigenschaften der erfindungsgemäßen Dichtungsanordnung wird erreicht, wenn das Statorelement eine insbesondere schräg verlaufende Kontaktfläche aufweist, welche als Dichtfläche für das weitere Dichtungselement dient. Der schräge Verlauf der Kontaktfläche ermöglicht eine großflächige Kontaktierung des anliegenden weiteren Dichtungselements mit erhöhtem Anpreßdruck.

Bei einer elastischen Ausbildung des weiteren Dichtungselements wird das weitere Dichtungselement bei rotierendem Rotorelement durch die entstehenden Fliehkräfte ausgeweitet und hebt sich insbesondere von der Kontaktfläche des Statorelements ab, wodurch die Abdichtung zwischen Rotor- und Statorelement aufgehoben wird. Diese wird im rotierenden Zustand auch nicht mehr oder nur noch in vermindertem Maße benötigt, da bei rotierendem Zustand der Dichtungsanordnung eine dynamische Abdichtung durch die Dichtung im Hohlraum zwischen Rotor- und Statorelement erreicht wird. Bei einer Verlangsamung der Drehzahl zwischen Rotor- und Statorelement und einem schließlichen Anhalten der Drehung verringern sich die auftretenden Fliehkräfte und das weitere Dichtungselement legt sich unter Ausübung seiner Dichtwirkung wieder an die jeweilige Kontaktflächen an, wobei wieder die Abdichtung zwischen stehendem Rotor- und Statorelement erreicht wird.

Erfindungsgemäß wird als weiteres Dichtungselement ein an sich bekannter O-Ring verwendet, der z.B. die Spindelwelle einer Motorspindel umfaßt. Ein derartiger O-Ring besteht insbesondere aus einer Kautschukmischung, z.B. aus einem Fluor-Kautschuk ("Viton", Kurzbezeichnung "FKM" nach ISO 1629) oder Acrylnitril-Butadien-Kautschuk ("Perbunan NT", Kurzbezeichnung "NBR" nach ISO 1629).

Das weitere Dichtungselement kann auch neben einem runden Querschnitt (z.B. bei einem O-Ring) auch andere Querschnitte (z.B. annähernd quadratisch oder (recht-)eckig) besitzen und z.B. auch als an sich bekannter Quad-Ring aus dem angegebenen Werkstoff ausgebildet sein.

Die Erfindung ist anhand von Ausführungsbeispielen in den Zeichnungsfiguren näher erläutert. Es zeigen:
- Fig. 1: eine Schnittansicht des Endbereichs einer Spindelwelle einer Spindel mit erfindungsgemäßer Dichtungsanordnung,
- Fig. 2: eine Detaildarstellung der Dichtungsanordnung nach Fig. 1 im stehenden Zustand,
- Fig. 3: eine Detaildarstellung der Dichtungsanordnung nach Fig. 1 im rotierenden Zustand,
- Fig. 4: eine Schnittansicht des Endbereichs einer Spindelwelle einer Spindel mit zwei erfindungsgemäßen Dichtungsanordnungen (Doppeldichtung) sowie
- Fig. 5: eine Teilansicht A eines Dichtrings einer Dichtung einer Dichtungsanordnung nach Fig. 1.

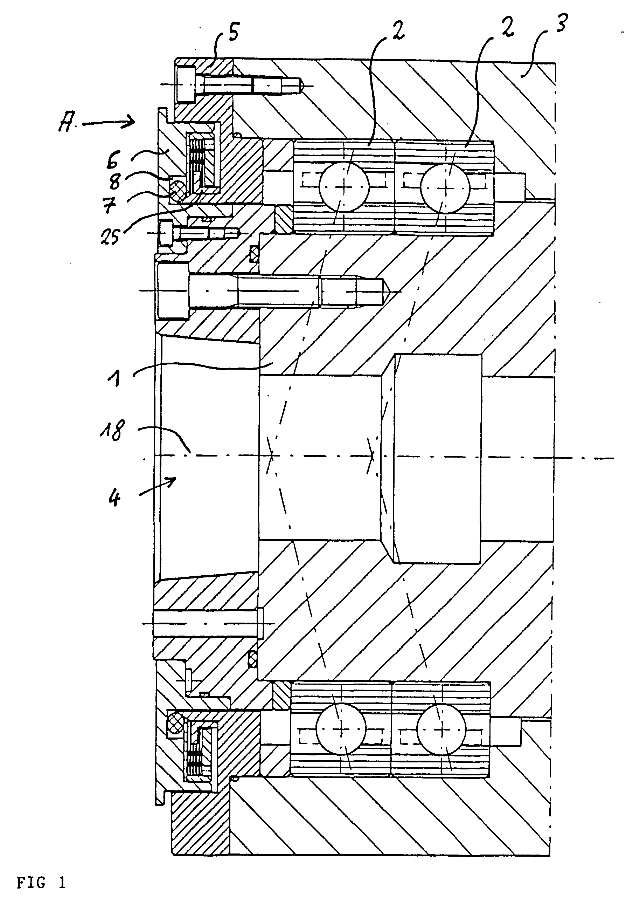

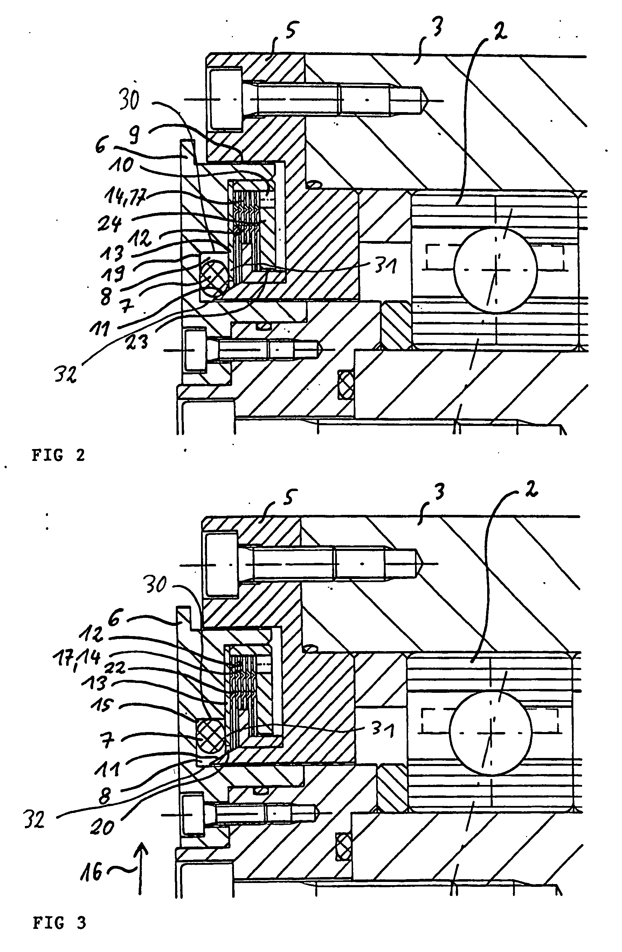

Aus Fig. 1 geht eine Schnittansicht eines Endbereichs einer Spindelwelle 1 hervor, die über insbesondere fettgeschmierte Lagerelemente 2 in einem Gehäuse 3 einer Spindel aufgenommen ist. Die Spindelwelle 1 ist als Hohlwelle ausgebildet und besitzt eine Öffnung 4 z.B. zur Aufnahme von Werkzeugen oder Werkzeugspannelementen (nicht näher abgebildet). Fig. 1 zeigt ferner eine Schnittansicht einer umlaufend angeordneten Dichtungsanordnung mit einem Statorelement 5 mit zugehörigem Winkel 25, einem Rotorelement 6 mit einer Ausnehmung 8 in der ein weiteres Dichtungselement 7 zur Abdichtung des Statorelements 5 gegenüber dem Rotorelement 6 bei stehender Spindelwelle 1 aufgenommen ist. Weitere Einzelheiten der Dichtungsanordnung gemäß Fig. 1 gehen aus den vergrößerten Darstellungen gemäß Fig. 2 und Fig. 3 hervor.

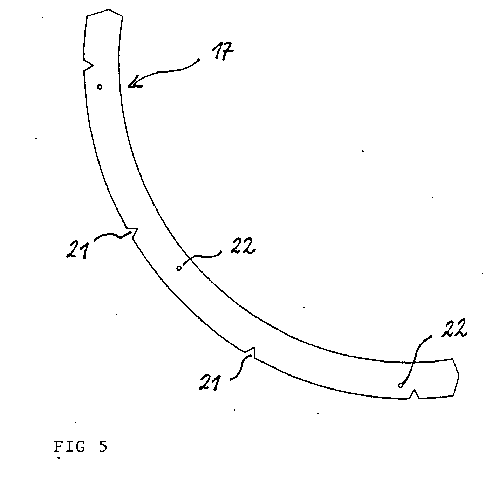

Nach Fig. 2 ist in einem Hohlraum 12 zwischen Statorelement 5 und Rotorelement 6 eine an sich bekannte Dichtung 14 angeordnet, die insbesondere aus z.B. in der WO 99/49246 beschriebenen Dichtringen 17 (vgl. Fig. 5) bestehen. Etwaige in den Hohlraum 12 der Dichtungsanordnung durch den Kanal 9 und die Verbindung 23 eingetretene Flüssigkeit wird durch die in der WO 99/49246 beschriebene Funktion der Dichtung 14 über die Öffnung 10 des Bauteils 24 des Rotorelements 6 aus dem Hohlraum 12 hinaus wieder in den Kanal 9 zurückgeleitet. Damit wird bei rotierendem Rotorelement 6 gegenüber stehendem Statorelement 5 eine dynamische Abdichtwirkung erreicht.

Die Dichtung 14 kann auch als an sich bekannte Labyrinth- oder Kammerdichtung ausgeführt sein (nicht näher abgebildet).

Bei der Darstellung nach Fig. 2, d.h. bei gegenüber dem Statorelement 5 stehenden Rotorelement 6 liegt das weitere Dichtungelement 7, (z.B. ein O-Ring oder ein Quad-Ring) an einer Kontaktfläche 11 des Statorelements 5 an, wodurch eine statische Abdichtung zwischen Statorelement 5 und Rotorelement 6 erreicht wird. Die Kontaktfläche 11 des Statorelements 5 verläuft schräg zur Achse 18 der Spindelwelle 1. Das weitere Dichtungselement 7 kontaktiert zur Abdichtung die Kontaktfläche 11 des Statorelements 5, die Wand 19 der Ausnehmung 8 und das Trennelement 13 des Rotorelements 6. Sämtliche Teile der Dichtungsanordnung sind - soweit nicht anders dargestellt - rotationssymmetrisch und umlaufend ausgeführt.

Bei rotierendem Rotorelement 6, d.h. bei angetriebener Spindelwelle 1 der Spindel treten Fliehkräfte auf, wodurch das insbesondere elastisch ausgebildete weitere Dichtungselement 7 in radialer Richtung 16 nach außen kraftbeaufschlagt wird, in den Bereich 15 der Ausnehmung 8 wandert und die gemäß Fig. 3 abgebildete äußere - von der Kontaktfläche 11 abgehobene - Lage einnimmt. Damit wird die Dichtfunktion des weiteren Dichtungselements 7 gegenüber dem Statorelement 5 und dem Rotorelement 6 aufgehoben und die Öffnung 20 zwischen dem Trennelement 13 und der Kontaktfläche 11 freigegeben. Die dynamische Dichtwirkung wird nun allein durch die Dichtung 14 im Hohlraum 8 gewährleistet. Durch das Abheben des weiteren Dichtelements 7 bei rotierendem Rotorelement 6 wird das weitere Dichtungselement 7 verschleißarm in der Ausnehmung 8 aufgenommen.

Das weitere Dichtungselement 7 dient dabei zur statischen Abdichtung. Zur Verschleißminderung hebt sich das weitere Dichtungselement 7 durch Nutzung der bei der Rotation auftretenden Fliehkräfte ab, wodurch die Dichtfunktion vermindert und schließlich aufgehoben wird. Bei einer Verringerung der Drehzahl nehmen auch die Fliehkräfte ab, so daß sich das weitere Dichtungselement 7 wieder an die genannten Bezugsflächen annähert und im Stillstand diese schließlich statisch vollständig abdichtet.

Bei der erfindungsgemäßen Dichtungsanordnung wird somit eine dynamisch abdichtende Dichtung 14 im Hohlraum 12 mit einem statisch abdichtenden weiteren Dichtungselement 7 in der Ausnehmung 8 kombiniert.

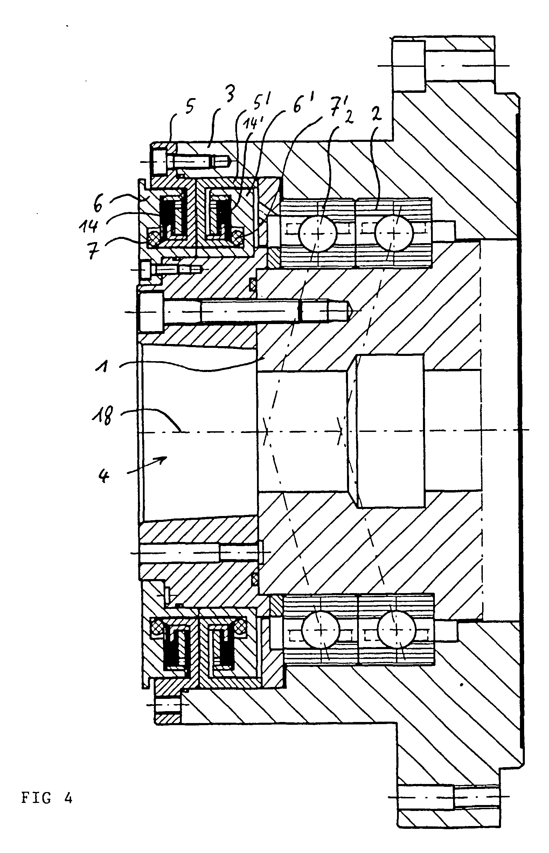

Aus Fig. 4 geht eine mit zwei Dichtungsanordnungen abgedichtete Spindelwelle 1 hervor, die insbesondere bei ölgeschmierten Lagerelementen 2 Anwendung finden kann um ein Austreten von Lageröl zu verhindern. Bauelemente der zweiten Dichtungsanordnung, die denen der ersten Dichtungsanordnung entsprechen sind als korrespondierende Elemente mit gestrichenen Bezugszeichen versehen.

Fig. 5 zeigt eine Teilansicht eines Dichtrings 17 mit umlaufenden Kerben 21 und Ausbuchtungen 22, letztere dienen zur beabstandeten Aufnahme mehrerer Dichtringe 17 im Hohlraum 12 zur Bildung einer Dichtung 14. Dabei sind die Dichtringe 17 in Rotorelement 6 aufgenommen und rotieren mit diesem z.B. bei Rotation der Spindelwelle 1.

Die erfindungsgemäße Dichtungsanordnung bietet besondere Vorteile bei der Verwendung in einer Werkzeugspindel insbesondere mit einem automatischen Werkzeugwechselsystem, da ein Eindringen von Fremdpartikeln und Flüssigkeit von außen auch bei stehender Spindelwelle 1 (z.B. beim Werkzeugwechsel) zuverlässig unterbunden wird und das weitere Dichtungselement 7 bei rotierender Spindelwelle 1 keiner Verschleißreibung ausgesetzt ist.

Generell ist der Begriff "Spindel" allgemein auszulegen und kann in der konkreten Ausführungsform z.B. eine Motorspindel, eine Riemenspindel, oder eine Getriebespindel etc. betreffen.

### Bezugszeichen

- 1: Spindelwelle
- 2: Lagerelement
- 3: Gehäuse
- 4: Öffnung
- 5: Statorelement
- 6: Rotorelement
- 7: weiteres Dichtungselement
- 8: Ausnehmung
- 9: Kanal
- 10: Öffnung
- 11: Kontaktfläche
- 12: Hohlraum
- 13: Trennelement
- 14: Dichtung
- 15: Bereich
- 16: radiale Richtung
- 17: Dichtring
- 18: Achse
- 19: Wand
- 20: Öffnung
- 21: Kerbe
- 22: Ausbuchtung
- 23: Verbindung
- 24: Bauteil
- 25: Winkel

## Patentansprüche

1. Dichtungsanordnung, insbesondere zur Abdichtung einer in einem Gehäuse drehend aufgenommenen Spindelwelle (1) einer Spindel, mit einem stehenden Statorelement (5), welches mit einem rotierenden, insbesondere an der Spindelwelle (1) befestigten Rotorelement (6) mindestens einen Hohlraum (12) zur Aufnahme einer Dichtung (14) bildet, wobei der Hohlraum über mindestens eine Öffnung (10) mit einem Kanal (9) der Dichtungsanordnung zur Abführung von bei der Rotation des Rotorelements (6) in den Hohlraum (12) eingetretener Flüssigkeit ausgebildet ist, wobei mindestens ein weiteres Dichtungselement (7) vorgesehen ist, welches das Rotorelement (6) gegenüber dem Statorelement (5) bei stehendem Rotorelement (6) abdichtet und das weitere Dichtungselement (7) in einer Ausnehmung (8) des Rotorelements (6) angeordnet ist,
**dadurch gekennzeichnet, daß** die Ausnehmung (8) durch eine Wand (19) und drei Wandbereiche (30, 31, 32) des Rotorelements (6) gebildet wird und in die Ausnehmung (8) eine schräg verlaufende Kontaktfläche (11) des Statorelements (5) hineinreicht, wobei das weitere Dichtungselement (7) bei stehendem Rotorelement (6) die Wand (19), den Wandbereich (31) sowie die schräg verlaufende Kontaktfläche (11) kontaktiert und bei rotierendem Rotorelement (6) die Wand (19) sowie die Wandbereiche (30) und (31) kontaktiert.

2. Dichtungsanordnung nach Anspruch 1,
**dadurch gekennzeichnet, daß** die Ausnehmung (8) einen Bereich (15) zur Aufnahme des insbesondere durch auftretende

3. Dichtungsanordnung nach einem der vorhergehenden Ansprüche,
**dadurch gekennzeichnet, daß** das weitere Dichtungselement (7) zur Aufweitung bei zunehmenden und zur Kontraktion bei abnehmenden Fliehkräften elastisch ausgebildet ist.

4. Dichtungsanordnung nach einem der vorhergehenden Ansprüche,
**dadurch gekennzeichnet, daß** das weitere Dichtungselement (7) als O-Ring ausgebildet ist.

5. Dichtungsanordnung nach Anspruch 6,
**dadurch gekennzeichnet ,daß** der O-Ring aus einer Kautschukmischung besteht.

## Claims

1. A sealing arrangement, in particular for sealing a spindle shaft (1) accommodated in a rotary manner in a housing, comprising a stationary stator element (5) which, together with a rotating rotor element (6), in particular fastened to the spindle shaft (1), forms at least one cavity (12) for accommodating a seal (14), the cavity being formed via at least one opening (10) with a passage (9) of the sealing arrangement for discharging liquid which has entered the cavity (12) during the rotation of the rotor element (6), whereby at least one further sealing element (7) is provided which seals the rotor element (6) relative to the stator element (5) when the rotor element (6) is stationary and whereby the further sealing element (7) is arranged in a recess (9) of the rotor element (6), **characterized in that** the recess (8) is formed by a wall (19) and three wall-regions (30, 31, 32) of the rotor element (6), whereby an obliquely running contact surface (11) of the stator element (5) reaches in the recess (8) and whereby the further sealing element (7) contacts the wall (19), the wall-region (31) and the obliquely running contact surface (11) when the rotor element (6) is stationary and whereby the further sealing element (7) contacts the wall (19) and the wall-regions (30, 31) when the rotor element (6) is rotating.

2. The sealing arrangement as claimed in claim 1, **characterized in that** the recess (8) has a region (15) for accommodating the further sealing element (7), which is expanded in radial direction (16) in particular by centrifugal forces which occur.

3. The sealing arrangement as claimed in one of the preceding claims, **characterized in that** the further sealing element (7) is of elastic design for expansion during increasing centrifugal forces and for contraction during decreasing centrifugal forces.

4. The sealing arrangement as claimed in one of the preceding claims, **characterized in that** the further sealing element (7) is designed as an O-ring.

5. The sealing arrangement as claimed in claim 4, **characterized in that** the O-ring consists of a rubber mixture.

## Revendications

1. Dispositif d'étanchéité, notamment pour réaliser l'étanchéité d'un arbre de broche (1) reçu à rotation dans un boîtier, comprenant un élément de stator fixe (5) qui forme, avec un élément de rotor rotatif (6) notamment fixé sur l'arbre de broche (1), au moins un espace creux (12) pour recevoir un joint d'étanchéité (14), l'espace creux étant réalisé par le biais d'au moins une ouverture (10) avec un canal (9) du dispositif d'étanchéité pour l'évacuation de liquide ayant pénétré dans l'espace creux (12) lors de la rotation de l'élément de rotor (6), au moins un élément d'étanchéité supplémentaire (7) étant prévu, lequel réalise l'étanchéité de l'élément de rotor (6) par rapport à l'élément de stator (5) lorsque l'élément de rotor (6) est immobile et l'élément d'étanchéité supplémentaire (7) étant disposé dans un logement (8) de l'élément de rotor (6),
**caractérisé en ce que** le logement (8) est formé par une paroi (19) et trois zones de paroi (30, 31, 32) de l'élément de rotor (6) et une surface de contact (11), s'étendant obliquement, de l'élément de stator (5) pénétrant dans le logement (8), l'élément d'étanchéité supplémentaire (7) venant en contact avec la paroi (19), la zone de paroi (31) ainsi que la surface de contact (11) s'étendant obliquement lorsque l'élément de rotor (6) est immobile, et venant en contact avec la paroi (19) et les zones de paroi (30) et (31) lorsque l'élément de rotor (6) tourne.

2. Dispositif d'étanchéité selon la revendication 1, **caractérisé en ce que** le logement (8) présente une zone (15) pour recevoir l'élément d'étanchéité supplémentaire (7) élargi dans la direction radiale (16) notamment sous l'effet des forces centrifuges.

3. Dispositif d'étanchéité selon l'une quelconque des revendications précédentes,
**caractérisé en ce que** l'élément d'étanchéité supplémentaire (7) est réalisé de manière élastique pour s'élargir lorsque les forces centrifuges augmentent et pour se contracter lorsqu'elles diminuent.

4. Dispositif d'étanchéité selon l'une quelconque des revendications précédentes,
**caractérisé en ce que** l'élément d'étanchéité supplémentaire (7) est réalisé sous forme de joint torique.

5. Dispositif d'étanchéité selon la revendication 4, **caractérisé en ce que** le joint torique se compose d'un mélange de caoutchouc.
